# EUROPEAN PATENT APPLICATION

(11) **EP 4 694 368 A1**
(43) Date of publication of application: **11.02.2026**
(21) Application number: 23932022.9
(22) Date of filing: 06.04.2023
(51) Int. Cl.: H04W 52/02

(54) **TERMINAL DEVICE, BASE STATION DEVICE, AND CONTROL METHOD**

(71) Applicant: 1FINITY INC., Kawasaki-shi, Kanagawa 211-8588 (JP)
(72) Inventor: UEMURA, Katsunari, Kawasaki-shi, Kanagawa 211-8588 (JP); CHENG, Huiting, Kawasaki-shi, Kanagawa 211-8588 (JP); SHIMOMURA, Tsuyoshi, Kawasaki-shi, Kanagawa 211-8588 (JP)
(74) Representative: Haseltine Lake Kempner LLP
(86) International application number: PCT/JP2023/014185
(87) International publication number: WO 2024/209611

(57) **Abstract**

A terminal device that communicates with a base station device, the terminal device including: a receiver configured to receive, from the base station device, instruction information considering a first active period related to discontinuous reception by the terminal device in a connected state, a second active period indicating a period in which transmission and reception are enabled in units of cells, and extension of the first active period; a controller configured to control transmission and reception in the first active period within the second active period; and a processor configured to determine, based on the instruction information, in a case where the extended first active period exceeds an end timing of the second active period, whether to perform transmission and reception in the extended first active period or end the first active period in conjunction with end of the second active period.

## Description

### [Technical Field]

The present embodiment relates to a terminal device, a base station device, and a control method.

### [Background Art]

In the 3rd generation partnership project (3GPP^{®}), which is a standardization project, as New Radio (also referred to as "5G"), which is the fifth generation mobile communication, technical specifications of communication standards that satisfy requirements of enhanced mobile broadband (eMBB), massive machine type communications (MTC), and ultra-reliable and low latency communication (URLLC) have been considered.

In 3GPP, a technology for network energy savings (NES) has been considered to reduce power consumption on a network side (that is, a base station device and core network equipment) (Non Patent Document 1).

As one of the technologies for NES, Cell discontinuous transmission (DTX)/discontinuous reception (DRX) for implementing DRX and/or DTX in units of cells has been considered. Cell DTX/DRX is a technology in which a base station device configures an active period and an inactive period (or non-active period) in units of cells, and the base station device performs transmission and reception only in the active period and restricts transmission and reception in the inactive period, thereby reducing power consumption (Non Patent Documents 1 and 2).

### [Citation List]

### [Non Patent Document]

[Non Patent Document 1] 3GPP TR 38.864 V18.0.0(2022-12)
[Non Patent Document 2] R2-2301399

### [Summary of Invention]

### [Technical Problem]

By applying Cell DTX/DRX, the base station device can obtain a power saving effect, but when unexpected transmission and reception of data occurs and scheduling is not completed within the active period of Cell DTX/DRX, transmission and reception of the remaining data need to wait for scheduling in the next active period. This causes a disadvantage that, for example, in a case where generated data is time-sensitive data, the quality of service (QoS) requirement is not satisfied, leading to a degradation in user experience.

Meanwhile, in order to complete data transmission and reception, Non Patent Document 2 proposes an approach of extending the active period of Cell DTX/DRX. However, since the extension of the active period is accompanied by an increase in power consumption of the base station device, there is a disadvantage that NES efficiency is lowered. In addition, since Cell DTX/DRX is controlled in units of cells, there is another disadvantage that data transmission and reception of one terminal device affects all terminal devices. However, Non Patent Document 2 does not mention solutions to such disadvantages.

It is an object in one aspect of the embodiment to improve power saving efficiency related to radio communication between a terminal device and a base station device when applying a technology for network energy savings.

### [Solution to Problem]

According to an aspect of the embodiments, a terminal device that communicates with a base station device, the terminal device including: a receiver configured to receive, from the base station device, instruction information considering a first active period related to discontinuous reception by the terminal device in a connected state, a second active period indicating an active period indicating a period in which transmission and reception are enabled in units of cells, and extension of the first active period; a controller configured to control transmission and reception in the first active period within the second active period; and a processor configured to determine, based on the instruction information, in a case where the extended first active period exceeds an end timing of the second active period, whether to perform transmission and reception in the extended first active period or end the first active period in conjunction with end of the second active period.

According to an aspect of the embodiments, a base station device that communicates with a terminal device, the base station device including: a transmitter configured to transmit, to the terminal device, instruction information considering a first active period related to discontinuous reception by the terminal device in a connected state, a second active period indicating an active period indicating a period in which transmission and reception are enabled in units of cells, and extension of the first active period; a controller configured to control transmission and reception in the first active period within the second active period; and a processor configured to generate the instruction information for causing the terminal device to determine, in a case where the extended first active period exceeds an end timing of the second active period, whether to perform transmission and reception in the extended first active period or end the first active period in conjunction with end of the second active period.

### [Advantageous Effects of Invention]

According to the above aspect, it is possible to improve power saving efficiency related to radio communication between a terminal device and a base station device when applying a technology for network energy savings.

### [Brief Description of Drawings]

Fig. 1 is a diagram illustrating an example of a configuration of a radio communication system according to an embodiment;
Fig. 2 is a diagram illustrating an example of a functional configuration of a terminal device according to the embodiment;
Fig. 3 is a diagram illustrating an example of a functional configuration of a base station device according to the embodiment;
Fig. 4 is a diagram illustrating an example of a control method of an active period in a case where Cell DTX or Cell DRX is configured;
Fig. 5 is a diagram illustrating an example of a control method of the active period of the terminal device related to data reception in a case where Cell DTX is configured;
Fig. 6 is a diagram illustrating an example of a control method of the active period of the terminal device related to data transmission in a case where Cell DRX is configured;
Fig. 7 is a diagram illustrating an example of a procedure of configuring Cell DTX and Cell DRX;
Fig. 8 is a diagram illustrating an example of a correspondence relationship between Cell DTX and Cell DRX;
Fig. 9 is a diagram illustrating another example of the control method of the active period in a case where Cell DTX or Cell DRX is configured;
Fig. 10 is a diagram illustrating an example of a control method of the active period and an inactive period of the terminal device;
Fig. 11 is a diagram illustrating an example of a control method of the active period and the inactive period related to downlink data reception by the terminal device;
Fig. 12 is a diagram illustrating an example of a control method of the active period and the inactive period related to uplink data transmission by the terminal device;
Fig. 13 is a diagram illustrating an example of a hardware configuration of the terminal device; and
Fig. 14 is a diagram illustrating an example of a hardware configuration of the base station device.

### [Description of Embodiments]

Hereinafter, embodiments will be described in detail with reference to the drawings. Problems and embodiments in the present specification are merely examples, and do not limit the scope of rights of the present application. In particular, the technology of the present application can be applied to even different expressions as long as the expressions are technically equivalent, and the scope of rights is not limited. The embodiments can be appropriately combined within a range in which the processing contents do not contradict each other. For example, an inactive period may be referred to as a non-active period.

A known technology may be appropriately used in a radio communication system according to the embodiments. Examples of the applicable known technology may include 5G (NR), Beyond 5G, or other radio communication schemes. The radio communication system according to the embodiments is applicable to NR, but is not limited thereto. For example, the embodiments are also applicable to LTE and LTE-Advanced. Further, the present embodiment is also applicable to a radio communication system using NR as a part of the radio communication system. Further, the embodiments are applicable to any radio communication system including at least a terminal device and a base station device, and are also applicable to future radio communication systems. In the following description, LTE and LTE-Advanced are also referred to as evolved universal terrestrial radio access (E-UTRA), but the meanings thereof are the same.

Hereinafter, embodiments of the base station device, the terminal device, and the radio (wireless) communication system disclosed in the present application will be described with reference to the drawings. Note that the following embodiments do not limit the disclosed technology.

### <Radio Communication System>

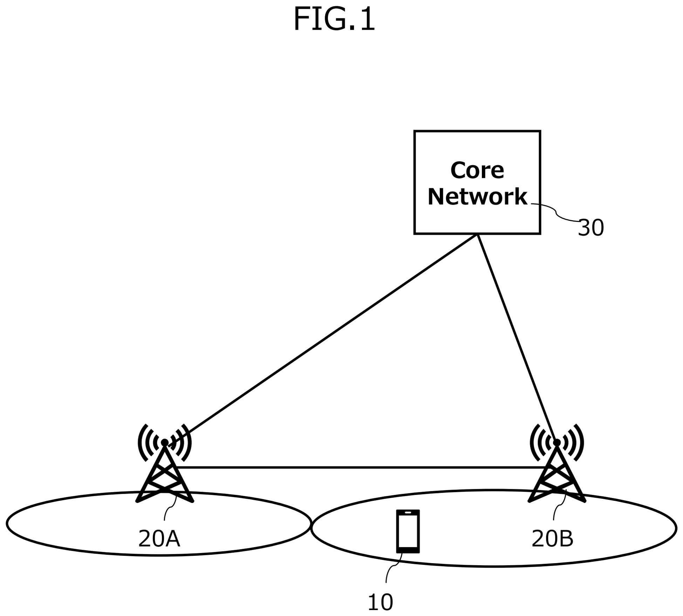

Fig. 1 is a diagram illustrating an example of a configuration of the radio communication system according to the embodiments. The radio communication system according to the embodiment includes, for example, one or more terminal devices 10, one or more base station devices 20 (20A and 20B), and a core network 30.

The terminal device 10 may be, for example, a wireless terminal such as various devices and equipment (such as sensor devices) having a radio communication function, such as a mobile phone, a smartphone, a personal digital assistant (PDA), a tablet, a wearable terminal, a personal computer, and a vehicle. Furthermore, the terminal device 10 may be referred to as a radio communication device, a communication device, a reception device, a mobile station, a user equipment (UE), a user device, or the like.

A radio communication service is provided to the terminal device 10 by the base station device 20 and the core network 30 in the radio communication system. The core network 30 has functions such as management of service subscriber information, session management for a voice call, and location registration management of the terminal device 10, for example. In addition, the core network 30 transmits control data and/or user data to the terminal device 10 via the base station device 20.

The core network 30 may be a 5G core (5GC) in 5G (NR) or an evolved packet core (EPC) in 4G (E-UTRA). Furthermore, a method for connection between the core network 30 and the base station device 20 may be a non-stand alone (NSA) method or a stand alone (SA) method.

The 5G base station device 20 connected to the 5GC is a gNB, and the 4G base station device 20 connected to the EPC is an eNB. In addition, 5G base station devices are connected by an Xn interface, and 4G base station devices are connected by an X2 interface.

An area (coverage area) formed by the base station device 20 may be referred to as a "cell". E-UTRA and 5G are cellular communication systems constructed by a plurality of cells. As the radio communication system according to the embodiments, either a time division duplex (TDD) scheme or a frequency division duplex (FDD) scheme may be applied, or a different scheme may be applied for each cell.

The base station device 20 may be divided into, for example, a centralized unit (CU), a distributed unit (DU), and a radio unit (RU). The CU is connected to the core network. The DU is connected to the terminal device 10 via, for example, the RU. A communication path between the CU and the DU is implemented by, for example, a fronthaul interface (F1 interface). Further, a plurality of DUs may be connected to one CU.

In the example illustrated in Fig. 1, data (downlink (DL) data) transmitted from the core network 30 to the terminal device 10 is transmitted from the core network 30 to the base station device 20, and is transmitted (transferred) from the base station device 20 to the terminal device 10.

Data (uplink (UL) data) transmitted from the terminal device 10 to the core network 30 is transmitted from the terminal device 10 to the base station device 20, and is transmitted (transferred) from the base station device 20 to the core network 30.

The terminal device 10 and the base station device 20 transmit and receive a radio resource control (RRC) message (also referred to as RRC signaling) in an RRC layer. In addition, the terminal device 10 and the base station device 20 transmit and receive a medium access control (MAC) control element (MAC CE) in an MAC layer.

The RRC message is transmitted as an RRC protocol data unit (PDU), and a common control channel (CCCH), a dedicated control channel (DCCH), a paging control channel (PCCH), a broadcast control channel (BCCH), a multicast control channel (MCCH), or the like is used as a logical channel (LCH) to be mapped.

The MAC CE is transmitted as an MAC PDU (or MAC subPDU). The MAC subPDU is equivalent to a service data unit (SDU) in the MAC layer with, for example, an 8-bit header, and the MAC PDU includes one or more MAC subPDUs.

The terminal device 10 in a connected state moves between the cells formed by the base station devices 20 using handover or conditional handover (CHO). In the conditional handover, the base station device 20 notifies the terminal device 10 of cell configuration information indicating a handover destination candidate cell and a handover trigger condition (measurement event type (measurement event or measurement report event)) in advance. The trigger condition is also referred to as an event condition. At this time, the base station device 20 can configure a maximum of eight candidate cells (that is, a maximum of eight conditional handover configurations) for the terminal device 10. The terminal device 10 measures a serving cell and a neighboring cell. In addition, the terminal device 10 evaluates the measurement event based on the trigger condition reported (notified) from the base station device 20. Then, in a case where the reported (notified) trigger condition is satisfied for the reported (notified) candidate cell, the terminal device 10 applies the cell configuration reported (notified) in advance as a cell configuration of the handover destination and performs the handover. As a result, rapid handover between the cells can be achieved.

### <Terminal Device>

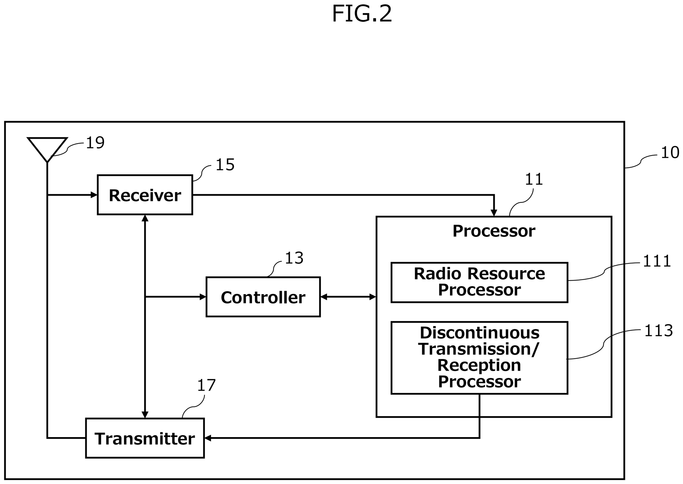

Fig. 2 is a diagram illustrating an example of a functional configuration of the terminal device 10 according to the embodiment. As illustrated in Fig. 2, the terminal device 10 includes, for example, a processor 11, a controller 13, a receiver 15, a transmitter 17, and a transmission/reception antenna unit 19. The processor 11 includes, for example, a radio resource processor 111 and a discontinuous transmission/reception processor 113. Note that the functional configuration of the terminal device 10 illustrated in Fig. 2 is merely an example, and functional categories and names of functional blocks may be different as long as the operation according to the embodiment can be performed.

The processor 11 generates, for example, control information for controlling the receiver 15 and the transmitter 17, and outputs the control information to the controller 13. The processor 11 executes processing related to, for example, a radio resource control layer, a packet data convergence protocol (PDCP) layer, a radio link control (RLC) layer, and a medium access control layer.

The radio resource processor 111 manages various types of configuration information (RRC parameter and information element (IE)) of the terminal device 10. For example, the radio resource processor 111 generates information to be placed (arranged) on each physical uplink channel, and outputs the information to the transmitter 17. In addition, the radio resource processor 111 performs measurement of the serving cell and the neighboring cell, start and stop of transmission/reception processing, a DL synchronization procedure (cell search), a UL synchronization procedure (random access procedure), reacquisition of system information, event evaluation considering handover, a series of processing related to handover, and the like based on (by using) an instruction from the base station device 20.

The discontinuous transmission/reception processor 113 executes a series of control processing related to discontinuous reception (DRX) and discontinuous transmission (DTX). For example, the discontinuous transmission/reception processor 113 manages, based on (by using) an instruction from the radio resource processor 111 or an instruction from the base station device 20, a plurality of timers related to discontinuous reception (DRX) and discontinuous transmission (DTX), and executes a series of transmission/reception processing of the terminal device 10 in the active period or the inactive period. In particular, the discontinuous transmission/reception processor 113 performs adjustment control of a timer related to Cell DTX/DRX related to discontinuous transmission and reception of the base station device 20 and a timer related to connected mode DRX (C-DRX) related to discontinuous transmission and reception by the terminal device 10 being connected.

The controller 13 performs various types of control in the terminal device 10. For example, the controller 13 generates a control signal or control data for controlling the receiver 15 and the transmitter 17 based on the control information received from the processor 11. In addition, the controller 13 controls uplink transmission to the base station device 20 and downlink reception from the base station device 20 based on (by using) information considering discontinuous transmission and reception.

The receiver 15 demultiplexes (separates), demodulates, and decodes various signals received from the base station device 20 via the transmission/reception antenna unit 19 based on the control signal provided from the controller 13. The receiver 15 outputs decoded information to the processor 11.

The transmitter 17 generates, for example, a physical uplink signal based on the control signal provided from the controller 13, and performs encoding, modulation, and the like on the physical uplink signal or the physical uplink channel provided from the processor 11. The transmitter 17 multiplexes various signals and transmits the multiplexed signal to the base station device 20 via the transmission/reception antenna unit 19.

Note that the processor 11 and the controller 13 are implemented by, for example, a processor system including a processor and a memory. In this case, the processor provides the functions of the processor 11 and the controller 13 by executing a program describing an operation of the terminal device 10 described below. In addition, the processor 11 and the controller 13 may be implemented by one processor system or may be implemented by a plurality of processor systems. Alternatively, the processor 11 and the controller 13 may be implemented by a digital signal processor (DSP), a hardware circuit, or the like.

### <Base Station Device>

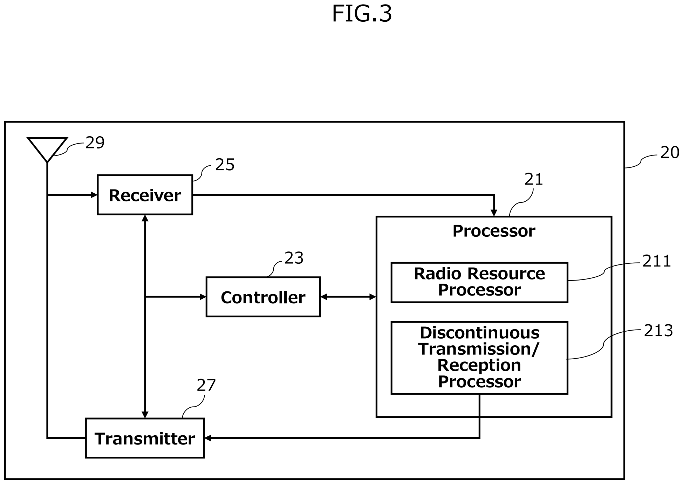

Fig. 3 is a diagram illustrating an example of a functional configuration of the base station device 20 according to the embodiment. As illustrated in Fig. 3, the base station device 20 includes, for example, a processor 21, a controller 23, a receiver 25, a transmitter 27, and a transmission/reception antenna unit 29. The processor 21 includes, for example, a radio resource processor 211 and a discontinuous transmission/reception processor 213. Note that the functional configuration of the base station device 20 illustrated in Fig. 3 is merely an example, and functional categories and names of functional blocks may be different as long as the operation according to the embodiment can be performed.

The processor 21 generates, for example, control information for controlling the receiver 25 and the transmitter 27, and outputs the control information to the controller 23. The processor 21 executes processing related to, for example, a radio resource control layer, a packet data convergence protocol layer, a radio link control layer, and a medium access control layer.

The radio resource processor 211 generates, for example, downlink data to be placed on a physical downlink shared channel PDSCH, an RRC message, and a MAC control element, and outputs the downlink data, the RRC message, and the MAC control element to the transmitter 27. In addition, the radio resource processor 211 generates a control signal or control data to be placed (arranged) on a physical downlink control channel PDCCH, and outputs the control signal or the control data to the transmitter 27. Further, the radio resource processor 211 manages various types of configuration information of the terminal device 10. The radio resource processor 211 performs start and stop of transmission/reception processing, start of a UL synchronization procedure (random access procedure), update of system information, adjustment of a beam transmission angle, cell configuration considering handover, pre-configuration of a parameter considering a measurement event type (measurement event ID), and the like based on a notification by a signal or an RRC message from the terminal device 10.

The discontinuous transmission/reception processor 213 executes a series of control processing related to discontinuous reception (DRX) and discontinuous transmission (DTX). For example, the discontinuous transmission/reception processor 213 performs management of a plurality of timers related to discontinuous reception (DRX) and discontinuous transmission (DTX), a series of transmission and reception processing of the base station device 20 in the active period or the inactive period, and the like based on (by using) an instruction from the radio resource processor 211 or a notification by a signal or an RRC message from the terminal device 10. In particular, the discontinuous transmission/reception processor 213 performs adjustment control of a timer related to Cell DTX/DRX related to discontinuous transmission and reception of the base station device 20 and a timer related to C-DRX related to discontinuous transmission and reception by the terminal device 10 being connected, and executes processing of generating instruction information of the terminal device 10 based on (by using) an adjustment result.

The controller 23 performs various types of control in the base station device 20. For example, the controller 23 generates a control signal or control data for controlling the receiver 25 and the transmitter 27 based on (by using) the control information from the processor 21. Furthermore, the controller 23 controls downlink transmission to the terminal device 10 and uplink reception from the terminal device 10 based on (by using) information considering discontinuous transmission and reception.

The receiver 25 demultiplexes (separates), demodulates, and decodes various signals received from the terminal device 10 or the core network 30 via the transmission/reception antenna unit 29 based on the control signal provided from the controller 23. The receiver 25 outputs decoded information to the processor 21.

The transmitter 27 generates, for example, a downlink reference signal based on the control signal provided from the controller 23. The transmitter 27 performs encoding, modulation, multiplexing, and the like on various types of information provided from the processor 21, thereby transmitting a signal to the terminal device 10 via the transmission/reception antenna unit 29.

In addition, the transmitter 27 transmits data to the terminal device 10, another base station device 20, or the core network 30. The receiver 25 receives data from the terminal device 10, another base station device 20, or the core network 30.

Note that the processor 21 and the controller 23 are implemented by, for example, a processor system including a processor and a memory. In this case, the processor provides the functions of the processor 21 and the controller 23 by executing a program describing an operation of the base station device 20 described below. In addition, the processor 21 and the controller 23 may be implemented by one processor system or may be implemented by a plurality of processor systems. Alternatively, the processor 21 and the controller 23 may be implemented by a DSP, a hardware circuit, or the like.

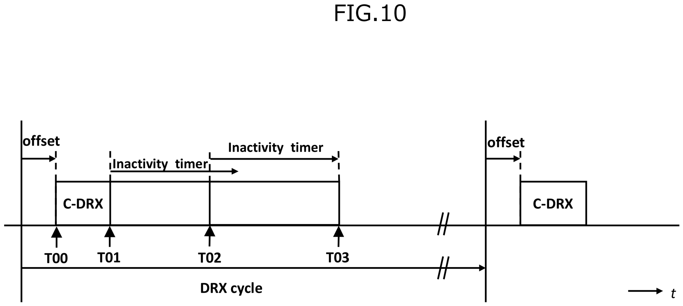

DRX (C-DRX and UE DRX) during connection according to the related art will be described with reference to Figs. 10 to 12. Fig. 10 is a diagram illustrating an example of a control method of the active period and the inactive period of the terminal device 10. A horizontal axis represents the passage of time. The active period indicates a period (zone (duration) or time) during which the terminal device 10 monitors the PDCCH. That is, the active period indicates a period in which the terminal device 10 attempts to decode the PDCCH scrambled with a predetermined (given) radio network temporary identifier (RNTI). The RNTI that the terminal device 10 attempts to decode is any one of a C-RNTI, a CI-RNTI, a CS-RNTI, an INT-RNTI, an SFI-RNTI, an SP-CSI-RNTI, a TPC-PUCCH-RNTI, a TPC-PUSCH-RNTI, a TPC-SRS-RNTI, an AI-RNTI, an SL-RNTI, an SLCS-RNTI, and an SL semi-persistent scheduling V-RNTI.

In addition, the terminal device 10 stops periodic or semi-periodic uplink transmission in the inactive period. Specifically, the terminal device 10 stops reporting a sounding reference signal (SRS) and channel state information (CSI) in the inactive period.

For the terminal device 10 of Figs. 10 to 12, at least an offset (offset) indicating a start position of the active period (C-DRX active period), an on duration timer indicating a duration of the active period, and a DRX cycle indicating a repetition cycle are configured by the base station device 20. These parts of information are configured as DRX-related parameters by the base station device 20 for the terminal device 10 using an RRC message.

As illustrated in Fig. 10, the active period is started from a timing (time T00) at which an offset (offset) time from a certain frame has expired. The terminal device 10 starts running of the on duration timer (drx-onDurationTimer) from time T00, and a period in which the on duration timer is running is considered as the active period. Further, when the physical downlink control channel PDCCH is received during running of the on duration timer and the PDCCH indicates notification of new data, the terminal device 10 starts running of an inactivity timer (drx-InactivityTimer (Inactivity timer in the figure)). The terminal device 10 performs transmission and reception assuming that a period in which the inactivity timer is running is also the active period. That is, the terminal device 10 considers that the active period is extended.

Time T01 indicates a timing at which the terminal device 10 receives the PDCCH indicating the notification of the new data. At this time, the terminal device 10 starts running of the inactivity timer (Inactivity timer) and also continues monitoring of the PDCCH. Time T02 indicates that the PDCCH indicating the notification of the new data is received again before the inactivity timer expires. At this time, the terminal device 10 restarts the inactivity timer that is running at time T02. Time T03 indicates a timing at which the inactivity timer restarted at time T02 expires.

The terminal device 10 considers that the active period expires at time T03 at which the inactivity timer expires, and shifts (transitions) to the inactive period (C-DRX inactive period).

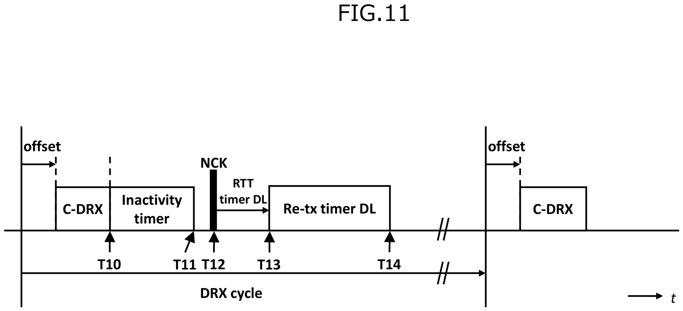

Fig. 11 is a diagram illustrating an example of a control method of the active period and the inactive period related to downlink data reception by the terminal device 10. A horizontal axis represents the passage of time.

Similarly to Fig. 10, it is assumed that the terminal device 10 receives the PDCCH at time T10 during the active period. At this time, in a case where downlink control information (DL control information (DCI)) obtained by decoding the PDCCH includes information (DL assignment) indicating a new downlink data reception resource, the terminal device 10 starts running of the inactivity timer (Inactivity timer). The terminal device 10 receives the physical downlink shared data channel PDSCH on the indicated downlink data reception resource (not illustrated).

The terminal device 10 transmits acknowledgement (ACK) indicating reception success to the base station device 20 in a case where the PDSCH is correctly received (decoding succeeds), and transmits a non-acknowledgement (NCK) indicating reception failure to the base station device 20 in a case where the PDSCH is not correctly received (decoding fails) (time T12). The ACK or NCK is transmitted on a physical uplink control channel PUCCH or a physical uplink shared channel PUSCH. Although Fig. 11 illustrates a case where the inactivity timer expires at time T11, such a case is an example for simplifying the description, and time T12 may be earlier than time T11.

When the NCK is transmitted at time T12, the terminal device 10 starts a downlink HARQ round trip timer (drx-HARQ-RTT-TimerDL (RTT timer DL in the figure)) from time T12, and when the downlink HARQ round trip timer expires (time T13), the terminal device 10 subsequently starts a downlink retransmission timer (drx-RetransmissionTimerDL (Re-Tx timer DL in the figure)) for waiting for retransmission of downlink data from the base station device 20.

Note that the terminal device 10 considers a period in which the downlink retransmission timer is running as the active period. In a case where the DCI of the PDCCH monitored during running of the downlink retransmission timer indicates retransmission of the corresponding downlink data, the terminal device 10 receives the retransmitted PDSCH, and executes generation and transmission processing of the ACK or NCK based on (by using) a received PDSCH reception result. The terminal device 10 repeats similar processing until the retransmitted downlink data is correctly received (not illustrated).

The downlink HARQ round trip timer and the downlink retransmission timer are configured as the DRX-related parameters by the base station device 20 for the terminal device 10 using an RRC message.

On the other hand, when the ACK is transmitted at time T12, the terminal device 10 starts the downlink HARQ round trip timer at time T12, but the downlink retransmission timer needs not be started when the timer expires (time T13). When the downlink retransmission timer expires (time T14), the terminal device 10 considers that the active period has expired, and shifts (transitions) to the inactive period (C-DRX inactive period).

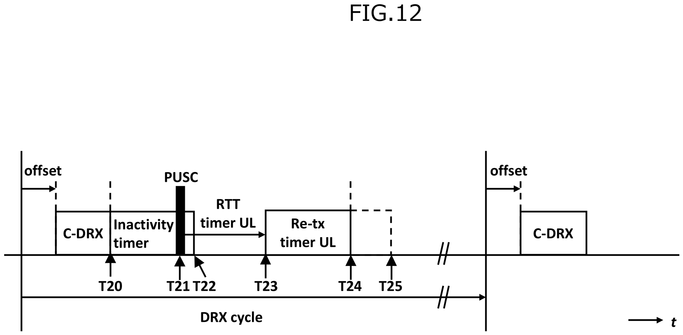

Fig. 12 is a diagram illustrating an example of a control method of the active period and the inactive period related to uplink data transmission by the terminal device 10. A horizontal axis represents the passage of time.

Similarly to Fig. 10, it is assumed that the terminal device 10 receives the PDCCH at time T20 during the active period. At this time, in a case where information indicating a new uplink data reception resource (UL grant) is included in the downlink control information (DL control information (DCI)) obtained by decoding the PDCCH, the terminal device 10 starts running of the inactivity timer (Inactivity timer). The terminal device 10 transmits the physical uplink shared data channel PUSCH on the indicated uplink data reception resource (time T21). Although Fig. 12 illustrates a case where the inactivity timer expires at time T22, such a case is an example for simplifying the description, and time T22 may be earlier than time T21.

When the PUSCH is transmitted at time T21, the terminal device 10 starts an uplink HARQ round trip timer (drx-HARQ-RTT-TimerUL (RTT timer UL in the figure)) from time T21, and when the uplink HARQ round trip timer expires (time T23), the terminal device 10 subsequently starts an uplink retransmission timer (drx-RetransmissionTimerUL (Re-Tx timer UL in the figure)) for waiting for the ACK/NCK corresponding to uplink data transmitted from the base station device 20. Note that the terminal device 10 considers a period in which the uplink retransmission timer is running as the active period. In a case where the DCI of the PDCCH monitored during running of the uplink retransmission timer indicates transmission success (ACK) of the corresponding uplink data at time T24, the terminal device 10 stops running of the uplink retransmission timer.

Further, in a case where the DCI of the PDCCH monitored during running of the uplink retransmission timer indicates retransmission of the corresponding uplink data at time T24, the terminal device 10 retransmits the PUSCH by using an uplink resource allocated for the retransmission, stops running of the uplink retransmission timer, and starts the uplink HARQ round trip timer. The terminal device 10 repeats similar processing (not illustrated) until the ACK is received from the base station device 20 as an uplink data transmission result.

The uplink HARQ round trip timer and the uplink retransmission timer are configured as the DRX-related parameters by the base station device 20 for the terminal device 10 using an RRC message.

When the uplink retransmission timer is stopped (time T24) or expires (time T25), the terminal device 10 considers that the active period has expired, and shifts (transitions) to the inactive period (C-DRX inactive period).

The terminal device 10 acquires a synchronization signal/physical broadcast channel block SSB (SS/PBCH block) and adjusts downlink synchronization using the SSB when connecting (accessing) to the base station device 20. The SSB includes a synchronization signal and a physical broadcast channel (PBCH). The synchronization signal includes a primary synchronization signal (PSS) and a secondary synchronization signal (SSS). The base station device 20 may transmit the SSB even in the inactive period.

The terminal device 10 adjusts uplink synchronization by using an individual timing advance (TA). The individual timing advance is individually reported (notified) by a random access response from the base station device 20 in the random access procedure. Uplink synchronization is considered valid during running of a timing advance timer (TA Timer). The random access procedure is started when the terminal device 10 transmits a physical random access channel (PRACH). The terminal device 10 may transmit the PRACH even in the inactive period in a case where the trigger condition is satisfied.

The embodiments will be described with reference to the drawings in consideration of the above matters. In the description of the embodiments, when a specific description of a known function or configuration related to the embodiments makes the gist of the embodiments unclear, the detailed description thereof will be omitted.

### <First Embodiment>

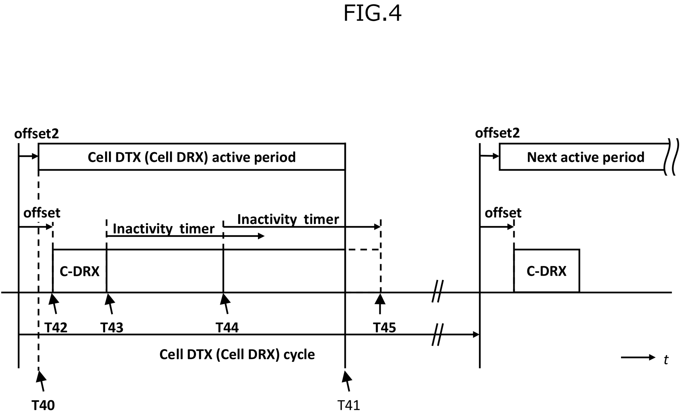

Figs. 4 to 6 illustrate an example of a control method of an active period and an inactive period of a terminal device 10 and a base station device 20 according to a first embodiment, and a horizontal axis represents the passage of time. A PDCCH (or RNTI) monitored by the terminal device 10 in the active period may be at least the same as in the related art. As for an uplink signal and an uplink channel for which the terminal device 10 stops transmission in the inactive period, transmission of at least the same signal/channel as in the related art is stopped.

For the terminal device 10 of Figs. 4 to 6, at least an offset (offset) indicating a start position of the active period (C-DRX active period) of each terminal device 10, an on duration timer indicating a duration of the active period, and a DRX cycle indicating a repetition cycle are configured by the base station device 20.

In addition, as parameters indicating DTX in units of cells (Cell DTX, a period in which transmission to the terminal device 10 is possible) or DRX in units of cells (Cell DRX, a period in which reception from the terminal device 10 is possible), at least an offset (offset2) indicating a start position of at least a cell active period (Cell DTX active period or Cell DRX active period), a cell active period on duration timer (Cell DTX on duration timer or Cell DRX on duration timer) indicating a duration of the active period of Cell DTX or Cell DRX, and a Cell DTX cycle or Cell DRX cycle indicating a repetition cycle are configured. These parts of information are configured as DRX-related parameters by the base station device 20 for the terminal device 10 using an RRC message. The RRC message is, for example, an RRC Reconfiguration message.

Hereinafter, when there is no need to distinguish Cell DTX and Cell DRX, they are referred to as Cell DTX/DRX.

Fig. 4 is a diagram illustrating an example of a control method of the active period in a case where Cell DTX or Cell DRX is configured. A horizontal axis represents the passage of time.

As illustrated in Fig. 4, the active period in units of cells (Cell DTX/DRX active period) is started from a timing (time T40) at which an offset (offset2) time from a certain frame has expired. The terminal device 10 and the base station device 20 start running of the cell active period on duration timer (cell DTX/DRX-onDurationTimer) from time T40, and a period in which the cell active period on duration timer is running is considered as the active period of Cell DTX/DRX. In addition, the terminal device 10 and the base station device 20 consider a period after the cell active period on duration timer expires (a period in which the cell active period on duration timer is not running) (time T41) as the inactive period of Cell DTX/DRX.

The terminal device 10 and the base station device 20 consider that transmission and reception similar to the active period as in the related art are possible in a case where C-DRX of the terminal device 10 is in the active period (first active period) and Cell DTX/DRX is in the active period (second active period). That is, in a case where at least one of C-DRX and Cell DTX/DRX of the terminal device 10 is the inactive period, it is considered that the same limitation as that of the inactive period according to the related art is needed.

Similarly to the related art, the active period of C-DRX is started from a timing (time 42) at which the offset (offset) time from a certain frame has expired. The terminal device 10 starts running of the on duration timer from time T42. Furthermore, in a case where the PDCCH is received during running of the on duration timer and the PDCCH indicates notification of new data, the terminal device 10 starts running of an inactivity timer (Inactivity timer) (time T43).

The terminal device 10 considers a period in which the inactivity timer is running as the active period. Time T44 indicates that the PDCCH indicating the notification of the new data is received again before the inactivity timer running from T43 expires. At this time, the terminal device 10 restarts the inactivity timer that is running at time T44. Time T45 indicates a timing at which the inactivity timer restarted at time T44 expires (ends).

As illustrated in Fig. 4, in a case where the active period of Cell DTX/DRX expires (ends) before the inactivity timer expires, the terminal device 10 determines whether to consider a period between time T41 and time T45 as the active period or the inactive period based on (by using) information from the base station device 20.

That is, the base station device 20 notifies (configures, instructs, transmits) the terminal device 10 of instruction information indicating, in a case where an expiration (end) timing of the inactivity timer is later than an expiration (end) timing of the active period of Cell DTX/DRX, whether to consider a period between the expiration timings as the active period or the inactive period. In other words, the instruction information is permission information indicating whether or not to shorten (or extend) the inactivity timer.

The above-described instruction information may be reported (notified) by using one or more bits in the PDCCH, may be reported (notified) as information identified by a new RNTI, or may be reported (notified) by a new MAC CE. In addition, the instruction information may be reported (notified) to all the terminal devices 10 in a cell using system information, or may be reported (notified) to each terminal device 10 by an individual RRC message.

In the case of using the PDCCH or the RNTI, the base station device 20 may report the instruction information every time the PDCCH indicating the notification of the new data is transmitted. A plurality of mobile station devices 10 may be grouped, and the instruction information may be reported in units of groups. Further, in the case of using the MAC CE, the base station device 20 may report the instruction information every time a PDSCH is transmitted. The instruction information may be indicated in units of inactivity timers, may be indicated in units of downlink data or uplink data (that is, units of hybrid automatic repeat and request (HARQ) processes) corresponding to the PDCCH including the instruction information, or may be indicated in units of Cell DTX/DRX cycles. In a case where the instruction information is not reported, the terminal device 10 may consider the period between time T41 and time T45 as the inactive period. Alternatively, in a case where the instruction information is not reported, the terminal device 10 may consider the period between time T41 and time T45 as the active period, or whether the period between time T41 and time T45 is determined to be the inactive period or the active period may be indicated in advance by an RRC parameter.

Furthermore, in the case of using the RRC message, the base station device 20 may perform the notification (configuration) in units of terminal devices 10, may perform the notification in units of MAC, may perform the notification in units of C-DRX, or may perform the notification in units of logical channels. In addition, the base station device 20 may report whether or not to apply the instruction information according to a priority of the logical channel. That is, the terminal device 10 does not have to shorten the inactivity timer if the logical channel has a high priority, and may shorten the inactivity timer if the logical channel has a low priority. The terminal device 10 does not have to shorten the inactivity timer in the case of an uplink resource (UL grant) included in a random access response or an uplink resource included in the PDCCH and considered as having a high priority, and the terminal device 10 may shorten the inactivity timer in the case of an uplink resource having a low priority.

In addition, the base station device 20 may perform the notification (configuration) in units of cells, that is, in units of Cell DTX/DRX, and may further switch between notification in units of cells and notification in units of terminal devices 10. In other words, in a case where an instruction reported in units of cells and an instruction reported (PDCCH or MAC CE) in units of terminal devices 10 are different from each other, the terminal device 10 may give priority to the instruction in units of terminal devices 10. For example, in a case where the instruction information in units of cells indicates the inactive period and the instruction information in units of terminal devices 10 indicates the active period, the terminal device 10 considers the period between time T41 and time T45 as the active period.

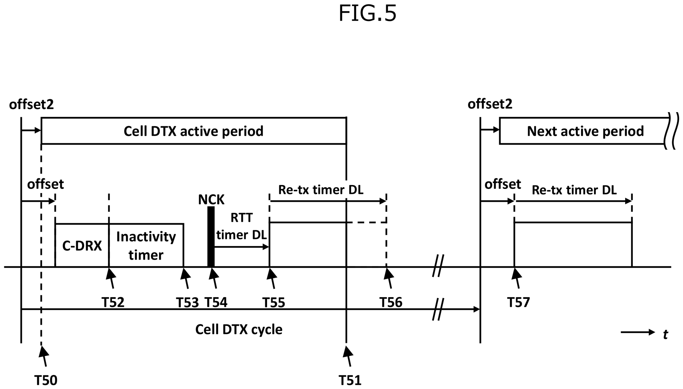

Fig. 5 is a diagram illustrating an example of a control method of the active period of the terminal device 10 related to data reception in a case where Cell DTX is configured. A horizontal axis represents the passage of time.

The DTX active period (Cell DTX active period) in units of cells is started from a timing (time T50) at which the offset (offset2) time from a certain frame has expired, and ends by expiration of the cell active period on duration timer (cell DTX-onDurationTimer) (time T51). The terminal device 10 and the base station device 20 consider a period in which the cell active period on duration timer is running as the active period of Cell DTX, and consider a period after the cell active period on duration timer expires (a period in which the cell active period on duration timer is not running) as the inactive period of Cell DTX.

Similarly to Fig. 11, it is assumed that the terminal device 10 receives the PDCCH at time T52 during the active period. At this time, in downlink control information (DL control information (DCI)) obtained by decoding the PDCCH, in a case where information (DL assignment) indicating a downlink data reception resource includes new data (in a case where a new data indicator (NDI) is toggled), the terminal device 10 starts running of the inactivity timer (Inactivity timer). The terminal device 10 receives the physical downlink shared data channel PDSCH on the indicated downlink data reception resource (not illustrated).

The terminal device 10 transmits acknowledgement (ACK) indicating reception success to the base station device 20 in a case where the PDSCH is correctly received (decoding succeeds), and transmits a non-acknowledgement (NCK) indicating reception failure to the base station device 20 in a case where the PDSCH is not correctly received (decoding fails) (time T54). The ACK or NCK is transmitted on a physical uplink control channel PUCCH or a physical uplink shared channel PUSCH. Although Fig. 5 illustrates a case where the inactivity timer expires at time T53, such a case is an example for simplifying the description, and time T54 may be earlier than time T53.

When the NCK is transmitted at time T54, the terminal device 10 starts a downlink HARQ round trip timer (drx-HARQ-RTT-TimerDL (RTT timer DL in the figure)) from time T54, and when the downlink HARQ round trip timer expires (time T55), the terminal device 10 subsequently starts a downlink retransmission timer (drx-RetransmissionTimerDL (Re-Tx timer DL in the figure)) for waiting for retransmission of downlink data from the base station device 20. An expiration (end) timing of the downlink retransmission timer is time T56.

Here, as illustrated in Fig. 5, in a case where the active period of Cell DTX expires (ends) before the downlink retransmission timer expires, the terminal device 10 determines whether to consider a period between time T51 and time T56 as the active period or the inactive period based on information from the base station device 20.

That is, the base station device 20 notifies (configures, instructs, transmits) the terminal device 10 of instruction information indicating, in a case where an expiration (end) timing of the downlink retransmission timer is later than the expiration (end) timing of the active period of Cell DTX, whether to consider a period between the expiration timings as the active period or the inactive period. In other words, the instruction information is permission information indicating whether or not to shorten (or extend) the downlink retransmission timer.

A notification method (configuration method) of the above-described instruction information and a unit of determining (instructing) that the instruction information is valid are similar to those in the description of Fig. 4, and thus, the details thereof are omitted.

In a case where the active period of the downlink retransmission timer is shortened by the instruction information, and reception of the PDSCH corresponding to the downlink retransmission timer is not completed, the terminal device 10 stops reception of the corresponding PDSCH until the active period of the next DRX cycle, and attempts re-reception in the active period of the next DRX cycle. At this time, the terminal device 10 may stop the downlink retransmission timer at time T51 and restart the downlink retransmission timer at a start time (time T57) of the active period of the next DRX cycle.

In addition, in a case where the active period of the downlink retransmission timer is shortened, the terminal device 10 suspends (pending) and maintains a corresponding DL HARQ process, and suspends each of a corresponding RLC timer and a corresponding PDCP timer. Further, the terminal device 10 may maintain a DL HARQ buffer (soft buffer) corresponding to the DL HARQ process without flushing (clearing).

Alternatively, the terminal device 10 may determine whether to flush (clear) or maintain the DL HARQ buffer (soft buffer) corresponding to the DL HARQ process based on capability information (UE capability) of the terminal device 10. Alternatively, the terminal device 10 may suspend and maintain the DL HARQ process and flush the corresponding DL HARQ buffer.

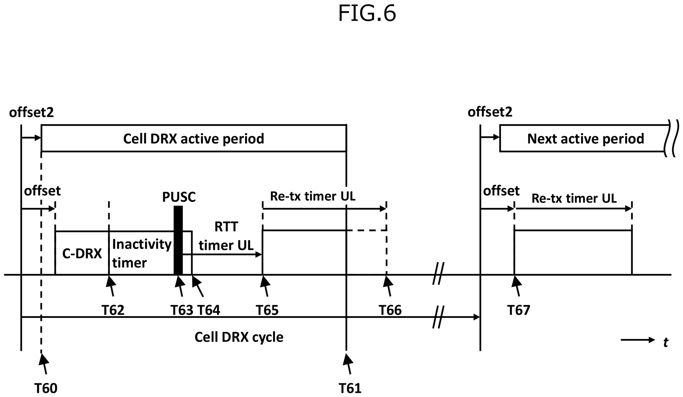

Fig. 6 is a diagram illustrating an example of a control method of the active period of the terminal device 10 related to data transmission in a case where Cell DRX is configured. A horizontal axis represents the passage of time.

The DRX active period (Cell DRX active period) in units of cells is started from a timing (time T60) at which the offset (offset2) time from a certain frame has expired, and ends by expiration of the cell active period on duration timer (cell drx-onDurationTimer) (time T61). The terminal device 10 and the base station device 20 consider a period in which the cell active period on duration timer is running as the active period of Cell DRX, and consider a period after the cell active period on duration timer expires (a period in which the cell active period on duration timer is not running) as the inactive period of Cell DRX.

Similarly to Fig. 12, it is assumed that the terminal device 10 receives the PDCCH at time T62 during the active period. At this time, in the downlink control information (DL control information (DCI)) obtained by decoding the PDCCH, in a case where information (UL grant) indicating an uplink data reception resource includes new data (in a case where a new data indicator (NDI) is toggled), the terminal device 10 starts running of the inactivity timer (Inactivity timer). The terminal device 10 transmits the physical uplink shared data channel PUSCH on a indicated uplink data transmission resource (time T63). Although Fig. 6 illustrates a case where the inactivity timer expires at time T64, such a case is an example for simplifying the description, and time T64 may be earlier than time T63.

When the PUSCH is transmitted at time T63, the terminal device 10 starts an uplink HARQ round trip timer (drx-HARQ-RTT-TimerUL (RTT timer UL in the figure)) from time T63, and when the uplink HARQ round trip timer expires (time T65), the terminal device 10 subsequently starts an uplink retransmission timer (drx-RetransmissionTimerUL (Re-Tx timer UL in the figure)) for waiting for the ACK/NCK corresponding to uplink data transmitted from the base station device 20. An expiration (end) timing of the downlink retransmission timer is time T66.

Here, as illustrated in Fig. 6, in a case where the active period of Cell DRX expires (ends) before the uplink retransmission timer expires, the terminal device 10 determines whether to consider a period between time T61 and time T66 as the active period or the inactive period based on information from the base station device 20.

That is, the base station device 20 notifies (configures, instructs, transmits) the terminal device 10 of instruction information indicating, in a case where an expiration (end) timing of the uplink retransmission timer is later than the expiration (end) timing of the active period of Cell DRX, whether to consider a period between the expiration timings as the active period or the inactive period. In other words, the instruction information is permission information indicating whether or not to shorten (or extend) the uplink retransmission timer.

A notification method (configuration method) of the above-described instruction information and a unit of determining (instructing) that the instruction information is valid are similar to those in the description of Fig. 4, and thus, the details thereof are omitted.

In a case where the active period of the uplink retransmission timer is shortened by the instruction information, and transmission of the PUSCH corresponding to the uplink retransmission timer is not completed, the terminal device 10 stops transmission of the corresponding PUSCH until the active period of the next DRX cycle, and attempts retransmission in the active period of the next DRX cycle. At this time, the terminal device 10 may stop the uplink retransmission timer at time T61 and restart the uplink retransmission timer at a start time (time T67) of the active period of the next DRX cycle.

In addition, in a case where the active period of the uplink retransmission timer is shortened, the terminal device 10 suspends (pending) and maintains a corresponding UL HARQ process, and suspends each of a corresponding RLC timer and a corresponding PDCP timer. Further, the terminal device 10 may maintain a UL HARQ buffer corresponding to the UL HARQ process without flushing (clearing).

Alternatively, the terminal device 10 may determine whether to flush (clear) or maintain the UL HARQ buffer corresponding to the UL HARQ process based on the capability information (UE capability) of the terminal device 10. Alternatively, the terminal device 10 may suspend and maintain the UL HARQ process and flush the corresponding UL HARQ buffer.

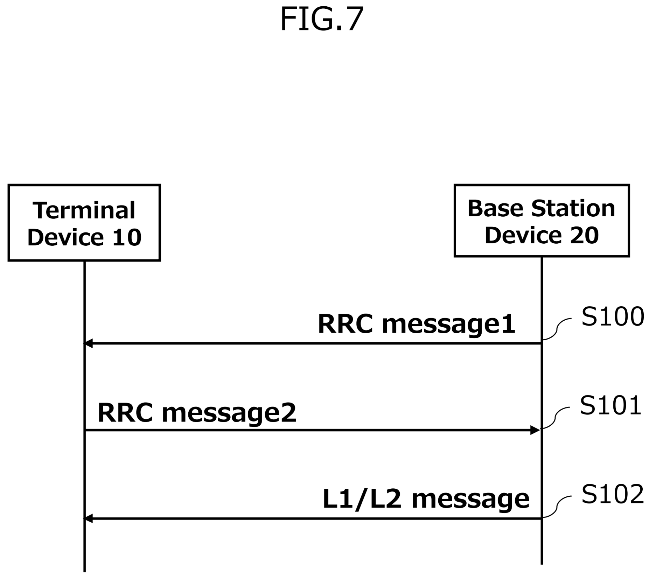

Fig. 7 is a sequence diagram illustrating an example of a configuration procedure related to Cell DTX/DRX configuration in the terminal device 10 and the base station device 20. Although not illustrated, the procedure starts in a state in which a radio connection (RRC setup) procedure between the terminal device 10 and the base station device 20 is completed and a state of the terminal device 10 is shifted to a connected state (also referred to as connected state or RRC Connected state). In addition, it is assumed that the terminal device 10 generates an RRC message (UE Capability message) and transmits the RRC message to the base station device 20 in order to notify the base station device 20 of a radio capability of the terminal device 10.

The base station device 20 transmits a first RRC message (RRC message1 in the figure) to the terminal device 10 (step S100). As the first RRC message, for example, an individual RRC message such as an RRCReconfiguration message is used. The first RRC message includes at least a Cell DTX/DRX duration (Cell DTX/DRX on duration timer), an offset value of Cell DTX/DRX (Cell DTX/DRX offset), and the Cell DTX/DRX cycle (Cell DTX/DRX cycle) as the Cell DTX/DRX configuration of the cell. The terminal device 10 that has received the Cell DTX/DRX configuration holds the configuration, enables the received configuration according to an instruction from the base station device 20, and applies the configuration in transmission/reception processing.

In addition, an additional identifier for determining whether or not to enable the Cell DTX/DRX configuration may be included together with the Cell DTX/DRX configuration. A plurality of Cell DTX/DRX configurations may be configured at the same time, or notification thereof may be made in the form of a list in which configurations can be added, deleted, and modified. In a case where the notification is made in the form of a list, an index number for indicating each list may be reported.

The base station device 20 may generate only one of the Cell DTX configuration and the Cell DRX configuration and notify the terminal device 10 of the generated Cell DTX configuration or Cell DRX configuration. The Cell DTX configuration and the Cell DRX configuration may be independently configured, or the Cell DTX configuration and the Cell DRX configuration may be configured in a linked manner. In addition, information indicating that one of the Cell DTX configuration and the Cell DRX configuration and the other thereof are the same parameter may be configured.

The terminal device 10 transmits a second RRC message (RRC message2 in the figure) to the base station device 20 as a response to the first RRC message (step S101). The second RRC message is, for example, an RRCReconfigurationComplete message.

After configuring the Cell DTX/DRX configuration, the base station device 20 may dynamically instruct enabling, disabling, or switching of the configuration according to a traffic volume, the number of connected terminal devices 10, or the like. In this case, an L1/L2 message is used as a signal for the instruction (step S102). The base station device 20 may give an instruction using a PDCCH common to the plurality of terminal devices 10 (that is, a PDCCH scrambled with a common RNTI), may give an instruction using an individual PDCCH for each terminal device 10, or may give an instruction using a MAC CE. In the case of using the common PDCCH, an index to be enabled may be specified by DCI bits. The common RNTI may be common to all the terminal devices 10 in the cell, or may be common to the terminal devices 10 belonging to a predetermined group. Classification of the group may be reported in advance by an RRC message. The group may also be indicated using a part of the DCI bits.

Alternatively, in the L1/L2 message in step S102, the base station device 20 may report information instructing a trigger of conditional handover in addition to enabling, disabling, or switching of the configuration. A conditional handover configuration is configured by the base station device 20 for the terminal device 10 by using an RRC message (for example, an RRCReconfiguration message) before the L1/L2 message is transmitted. At this time, the conditional handover configuration is held in the terminal device 10 until triggered by the L1/L2 message, and corresponding event evaluation is not performed. The base station device 20 indicates the instruction of the trigger of the conditional handover in units of terminal devices 10, in units of terminal devices 10 belonging to a predetermined group, or in units of terminal devices 10 in the cell.

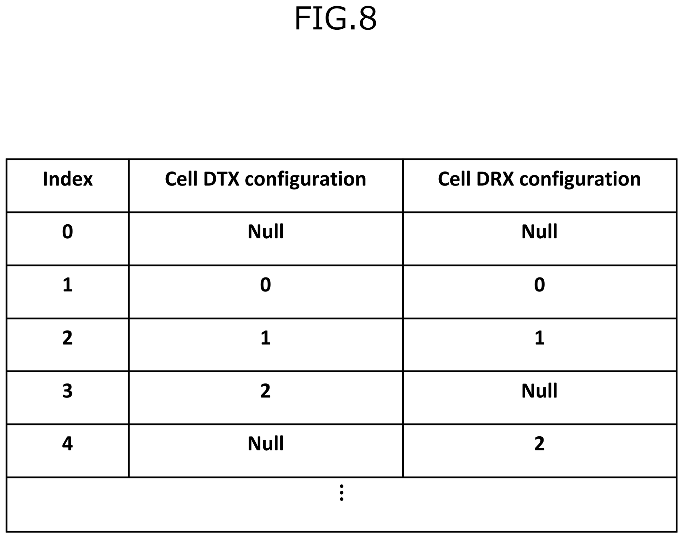

Fig. 8 is a diagram illustrating an example of a link of each configuration in a case where the plurality of Cell DTX configurations and the plurality of Cell DRX configurations are reported (notified). Fig. 8 illustrates a case where there are three different Cell DTX configurations of 0 to 2 (different parameter values). Similarly, Fig. 8 illustrates a case where there are three different Cell DRX configurations of 0 to 2 (different parameter values). In addition, an index (index) indicates a correspondence relationship (link) between the Cell DTX configuration and the Cell DRX configuration. Null illustrated in Fig. 8 means that there is no configuration or that a parameter indicating "Null" is indicated.

An index "0" indicates that neither the Cell DTX configuration nor the Cell DRX configuration is linked. That is, in this case, Cell DTX/DRX is not applied to the cell and the cell is invalid even if the Cell DTX/DRX configuration is configured, and the terminal device 10 and the base station device 20 perform the same
transmission/reception operation as in the related art. The index "0" may be a special fixed value indicating that Cell DTX/DRX is not applied.

An index "1" means that the Cell DTX configuration "0" and the Cell DRX configuration "0" are linked, and indicates that the Cell DTX configuration "0" and the Cell DRX configuration "0" are used (applied) at the same time. Similarly, an index "2" means that the Cell DTX configuration "1" and the Cell DRX configuration "1" are linked, and indicates that the Cell DTX configuration "1" and the Cell DRX configuration "1" are used (applied) at the same time.

An index "3" indicates that only the Cell DTX configuration "2" is used (applied). That is, in the terminal device 10, downlink reception in the cell is restricted by the Cell DTX configuration, while uplink transmission is not restricted. An index "4" indicates that only the Cell DRX configuration "2" is used (applied). That is, in the terminal device 10, uplink transmission of the cell is restricted by the Cell DRX configuration, while downlink reception is not restricted.

As described above, according to the first embodiment, even in a cell to which Cell DTX/DRX is applied for power saving, the terminal device 10 and the base station device 20 can flexibly extend or shorten the active period according to characteristics of generated data, and thus, it is possible to efficiently transmit and receive data while suppressing an increase in power consumption of the base station device 20.

### <Second Embodiment>

A second embodiment will be described. Note that the description of configurations, functions, or procedures common to the first embodiment and the second embodiment will be omitted. That is, points different from the first embodiment will be mainly described below.

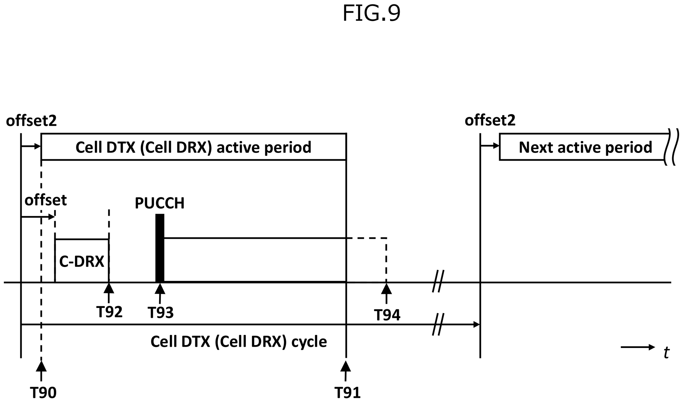

Fig. 9 is a diagram illustrating another example of a control method of an active period of a terminal device 10 related to data transmission in a case where Cell DTX/DRX is configured. A horizontal axis represents the passage of time.

A DTX/DRX active period (Cell DTX/DRX active period) in units of cells is started from a timing (time T90) at which an offset (offset2) time from a certain frame has expired, and ends by expiration of a cell active period on duration timer (cell DTX/drx-onDurationTimer) (time T91). The terminal device 10 and a base station device 20 consider a period in which the cell active period on duration timer is running as the active period of Cell DTX/DRX, and consider a period after the cell active period on duration timer expires (a period in which the cell active period on duration timer is not running) as an inactive period of Cell DTX/DRX.

It is assumed that the terminal device 10 transmits a PUCCH (scheduling request (SR)) for requesting the base station device 20 to allocate an uplink resource because uplink data is generated at time T93 of the active period of Cell DTX/DRX. Fig. 9 illustrates a case where the C-DRX active period as in the related art ends at time T92 at which the on duration timer expires, but such a case is an example for simplifying the description, and time T93 may be earlier than time T92.

In a case where the SR is transmitted, the terminal device 10 always considers a period after time T93 as the active period regardless of a configuration of the non-active period of C-DRX and monitors a PDCCH (RNTI). Further, the terminal device 10 determines whether or not to continuously consider a period after time T91 at which the active period of Cell DTX/DRX expires (ends) as the active period based on information from the base station device 20.

That is, the base station device 20 notifies (configures, instructs, and transmits) the terminal device 10 of instruction information indicating, in a case where an expiration (end) timing of the active period resulting from the SR transmission is later than an expiration (end) timing of the active period of Cell DTX/DRX, whether to consider a period between the expiration timings as the active period or the inactive period. In other words, the instruction information is permission information indicating whether or not to shorten (or extend) the active period resulting from the SR transmission.

The terminal device 10 monitors the PDCCH, and when the PDCCH including an uplink resource allocation (UL grant) is received, the terminal device 10 ends the active period resulting from the SR transmission, and at the same time, determines the active period and the non-active period of C-DRX according to a timing of a C-DRX configuration as in the related art. Even in the active period of C-DRX, when running of the on duration timer is not started, that is, when the PDCCH is received after an offset value (offset) related to C-DRX elapses and before time T92, the terminal device 10 may consider the corresponding period as the non-active period until the next DRX cycle. Time T94 indicates a timing at which the PDCCH including the uplink resource allocation (UL grant) is received, and in the example of Fig. 9, time T94 is out of a section in which the on duration timer is running in the C-DRX configuration, and thus, the terminal device 10 determines that a period after time T94 is the non-active period.

The above-described instruction information may be reported (notified) by using one or more bits in the PDCCH reporting the UL grant, or may be reported to each terminal device 10 by an individual RRC message. In the case of using the PDCCH, the base station device 20 may report the instruction information every time the PDCCH indicating notification of new data is transmitted.

In a case where the instruction information is not reported, the terminal device 10 may consider a period after time T91 as the inactive period. Alternatively, in a case where the instruction information is not reported, the terminal device 10 may consider the period after time T91 as the active period, or whether the period after time T91 is determined to be the inactive period or the active period may be indicated in advance by an RRC parameter.

Furthermore, in the case of using the RRC message, the base station device 20 may perform the notification (configuration) in units of terminal devices 10, may perform the notification in units of MAC, may perform the notification in units of C-DRX, or may perform the notification in units of logical channels. In addition, the base station device 20 may report whether or not to apply the instruction information according to a priority of the logical channel. That is, the terminal device 10 does not have to shorten the active period if the logical channel has a high priority, and may shorten the active period if the logical channel has a low priority. Alternatively, the base station device 20 may report a threshold of an uplink buffer size, and the terminal device 10 may determine whether or not to apply the instruction information based on whether or not the uplink buffer size that has triggered SR transmission is larger than a set threshold.

As another example, the terminal device 10 may apply similar control even in a case where the uplink data is generated, but there is no PUCCH allocation, and thus, a message 3 is transmitted according to a random access response (RAR) transmitted from the base station device 20 after a PRACH is transmitted to the base station device 20 for uplink resource allocation. In this case, the transmission of the message 3 is performed at time T93 in Fig. 9, and running of a timer related to contention resolution (contention resolution timer) is started from time T93. The terminal device 10 always considers a period in which the contention resolution timer is running as the active period and monitors the PDCCH (RNTI).

In Fig. 9, a time at which the contention resolution timer expires (ends) is time T94. As illustrated in Fig. 9, in a case where the active period of Cell DTX/DRX expires (ends) before the contention resolution timer expires, the terminal device 10 determines whether to consider a period from time T91 to time T94 as the active period or the inactive period based on information from the base station device 20.

That is, the base station device 20 notifies (configures, instructs, transmits) the terminal device 10 of instruction information indicating, in a case where an expiration (end) timing of the contention resolution timer is later than the expiration (end) timing of the active period of Cell DTX/DRX, whether to consider a period between the expiration timings as the active period or the inactive period. In other words, the instruction information is permission information indicating whether or not to shorten (or extend) the contention resolution timer.

A notification method (configuration method) of the above-described instruction information and a unit of determining (instructing) that the instruction information is valid are similar to the description of the active period resulting from SR transmission by the PUCCH, and thus, the details thereof are omitted.

In addition, the terminal device 10 may apply similar control in a case where a start request (PDCCH order) of a random access procedure using a dedicated preamble due to generation of downlink data in the base station device 20 is received and the PRACH is transmitted to the base station device 20. In this case, the transmission of the PRACH using the dedicated preamble is performed at time T93 in Fig. 9. The terminal device 10 always considers a period after time T93 as the active period regardless of the configuration of the non-active period of C-DRX and monitors the PDCCH (RNTI). Further, the terminal device 10 determines whether or not to continuously consider a period after time T91 at which the active period of Cell DTX/DRX expires (ends) as the active period based on information from the base station device 20.

That is, the base station device 20 notifies (configures, instructs, transmits) the terminal device 10 of instruction information indicating, in a case where an expiration (end) timing of the active period resulting from the transmission of the PRACH using the dedicated preamble is later than the expiration (end) timing of the active period of Cell DTX/DRX, whether to consider a period between the expiration timings as the active period or the inactive period. In other words, the instruction information is permission information indicating whether or not to shorten (or extend) the active period resulting from the transmission of the PRACH using the dedicated preamble.

The terminal device 10 monitors the PDCCH, and in a case where the PDCCH including the uplink resource allocation (UL grant) is received, the terminal device 10 ends the active period resulting from the transmission of the PRACH using the dedicated preamble, and at the same time, the timings of the active period and the non-active period of C-DRX follow the C-DRX configuration as in the related art. Time T94 indicates a timing at which the PDCCH including the uplink resource allocation (UL grant) is received, and in the example of Fig. 9, time T94 is out of a section in which the on duration timer is running in the C-DRX configuration, and thus, the terminal device 10 determines that a period after time T94 is the non-active period.

A notification method (configuration method) of the above-described instruction information and a unit of determining (instructing) that the instruction information is valid are similar to the description of the active period resulting from SR transmission by the PUCCH, and thus, the details thereof are omitted.

As described above, according to the second embodiment, even in a cell to which Cell DTX/DRX is applied for power saving, the terminal device 10 and the base station device 20 can extend or shorten the active period in which an instruction of an uplink data transmission resource or a downlink data reception resource is expected. Therefore, it is possible to efficiently transmit and receive data while suppressing an increase in power consumption of the base station device 20.

Furthermore, according to the first and second embodiments, in a cell to which Cell DTX/DRX is applied as a technology for network energy savings, the terminal device 10 and the base station device 20 can efficiently transmit and receive data while suppressing an increase in power consumption of the base station device 20. That is, the terminal device 10 and the base station device 20 can improve power saving efficiency related to radio communication between the terminal device 10 and the base station device 20.

Note that each of the above-described embodiments is for facilitating understanding of the present embodiment, and is not intended to limit the present embodiment. The present embodiment can be modified and improved without departing from the gist thereof, and the present embodiment includes equivalents thereof.

### <Hardware Configuration of Each Device in Each Embodiment>

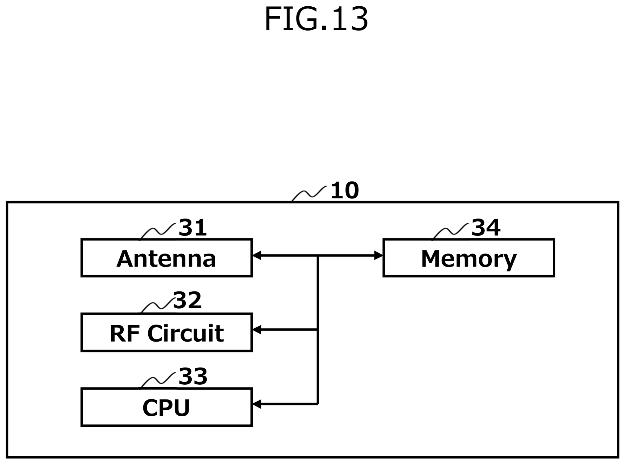

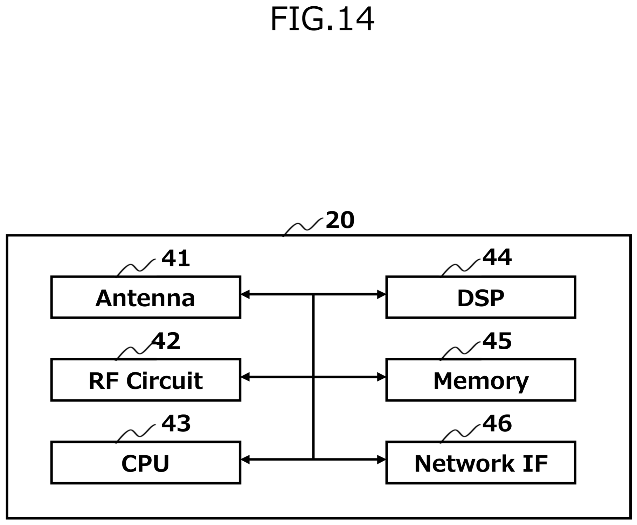

A hardware configuration of each device in the radio communication system of each embodiment will be described with reference to Figs. 13 and 14.

Fig. 13 is a diagram illustrating an example of a hardware configuration of the terminal device 10. As illustrated in Fig. 13, the terminal device 10 includes, for example, a radio frequency (RF) circuit 32 including an antenna 31, a central processing unit (CPU) 33, and a memory 34 as hardware components. Furthermore, the terminal device 10 may include a display device such as a liquid crystal display (LCD) connected to the CPU 33. The memory 34 includes, for example, at least one of a random access memory (RAM) such as a synchronous dynamic random access memory (SDRAM), a read only memory (ROM), and a flash memory, and stores a program, control information, and a data signal.

A correspondence between the functional configuration of the terminal device 10 illustrated in Fig. 2 and the hardware configuration of the terminal device 10 illustrated in Fig. 13 will be described. The transmission/reception antenna unit 19, the transmitter 17, and the receiver 15 are implemented by, for example, the RF circuit 32, or the antenna 31 and the RF circuit 32. The controller 13 and the processor 11 are implemented by, for example, the CPU 33, the memory 34, a digital electronic circuit (not illustrated), and the like. For example, examples of the digital electronic circuit include an application specific integrated circuit (ASIC), a field programmable gate array (FPGA), and a large scale integration (LSI).

Fig. 14 is a diagram illustrating an example of a hardware configuration of the base station device 20. As illustrated in Fig. 14, the base station device 20 includes, for example, an RF circuit 42 including an antenna 41, a CPU 43, a DSP 44, a memory 45, and a network interface (IF) 46 as hardware components. The CPU 43 is connected via a bus so as to be able to input and output various signals and data signals. The memory 45 includes, for example, at least one of a RAM such as an SDRAM, a ROM, and a flash memory, and stores a program, control information, and a data signal.

A correspondence between the functional configuration of the base station device 20 illustrated in Fig. 3 and the hardware configuration of the base station device 20 illustrated in Fig. 14 will be described. The transmission/reception antenna unit 29, the transmitter 27, and the receiver 25 are implemented by, for example, the RF circuit 42, or the antenna 41 and the RF circuit 42. The controller 23 and the processor 21 are implemented by, for example, the CPU 43, the DSP 44, the memory 45, a digital electronic circuit (not illustrated), and the like. Examples of the digital electronic circuit include an ASIC, an FPGA, and an LSI.

### [Reference Signs List]

10 Terminal device
20 Base station device
30 Core network
11, 21 Processor
13, 23 Controller
15, 25 Receiver
17, 27 Transmitter
19, 29 Transmission/reception antenna unit
31, 41 Antenna
32, 42 RF circuit
33, 43 CPU
34, 45 Memory
44 DSP
46 Network IF
111, 211 Radio resource processor
113, 213 Discontinuous transmission/reception processor

## Claims

1. A terminal device that communicates with a base station device, the terminal device comprising:
a receiver configured to receive, from the base station device, instruction information considering a first active period related to discontinuous reception by the terminal device in a connected state, a second active period indicating an active period indicating a period in which transmission and reception are enabled in units of cells, and extension of the first active period;
a controller configured to control transmission and reception in the first active period within the second active period; and
a processor configured to determine, based on the instruction information, in a case where the extended first active period exceeds an end timing of the second active period, whether to perform transmission and reception in the extended first active period or end the first active period in conjunction with end of the second active period.

2. The terminal device according to claim 1, wherein the instruction information is applied to a hybrid automatic repeat and request (HARQ) process, and the terminal device determines, based on the instruction information, in a case where a retransmission period of the HARQ process exceeds the end timing of the second active period, whether to perform transmission and reception in the retransmission period of the HARQ process or end the retransmission period of the HARQ process in conjunction with the end of the second active period.

3. The terminal device according to claim 2, wherein the instruction information is notified by a physical downlink control channel, and the terminal device determines, based on a radio resource included in the physical downlink control channel and the instruction information, whether or not to extend the first active period.

4. The terminal device according to claim 2, wherein the instruction information is configured corresponding to a priority of a logical channel, and the terminal device determines, based on the priority of the logical channel, whether or not to extend the first active period.

5. The terminal device according to claim 1, wherein the instruction information determines, based on the instruction information, in a case where the first active period is configured, when a third active period for monitoring a physical downlink control channel exceeds the end timing of the second active period, whether to perform transmission and reception in the third active period or to end the third active period in conjunction with end of the second active period.

6. A base station device that communicates with a terminal device, the base station device comprising:
a transmitter configured to transmit, to the terminal device, instruction information considering a first active period related to discontinuous reception by the terminal device in a connected state, a second active period indicating an active period indicating a period in which transmission and reception are enabled in units of cells, and extension of the first active period;
a controller configured to control transmission and reception in the first active period within the second active period; and
a processor configured to generate the instruction information for causing the terminal device to determine, in a case where the extended first active period exceeds an end timing of the second active period, whether to perform transmission and reception in the extended first active period or end the first active period in conjunction with end of the second active period.

7. The base station device according to claim 6, wherein the instruction information is configured for each HARQ process of the terminal device, and the base station device causes the terminal device to determine, based on the instruction information, in a case where a retransmission period of the HARQ process exceeds the end timing of the second active period, whether to perform transmission and reception in the retransmission period of the HARQ process or to end the retransmission period of the HARQ process in conjunction with the end of the second active period.

8. The base station device according to claim 7, wherein the base station device notifies the terminal device of the instruction information and a radio resource of the terminal device through a physical downlink control channel, and causes the terminal device to determine, based on the instruction information and the radio resource of the terminal device, whether or not to extend the first active period.

9. The base station device according to claim 7, wherein the instruction information is configured corresponding to a priority of a logical channel of the terminal device, and the base station device causes the terminal device to determine, based on the priority of the logical channel and the instruction information, whether or not to extend the first active period.

10. The base station device according to claim 6, wherein the base station device generates the instruction information for causing the terminal device to determine, in a case where the first active period is configured, when a third active period for the terminal device to monitor a physical downlink control channel exceeds the end timing of the second active period, whether to perform transmission and reception in the third active period or end the third active period in conjunction with the end of the second active period.

11. A control method of a terminal device, the control method comprising:
receiving, from a base station device, instruction information considering a first active period related to discontinuous reception by the terminal device in a connected state, a second active period indicating an active period indicating a period in which transmission and reception are enabled in units of cells, and extension of the first active period;
controlling transmission and reception in the first active period within the second active period; and
determining, based on the instruction information, in a case where the extended first active period exceeds an end timing of the second active period, whether to perform transmission and reception in the extended first active period or end the first active period in conjunction with end of the second active period.

12. A control method of a base station device, the control method comprising:
transmitting, to a terminal device, instruction information considering a first active period related to discontinuous reception by the terminal device in a connected state, a second active period indicating an active period indicating a period in which transmission and reception are enabled in units of cells, and extension of the first active period;
controlling transmission and reception in the first active period within the second active period; and
generating the instruction information for causing the terminal device to determine, in a case where the extended first active period exceeds an end timing of the second active period, whether to perform transmission and reception in the extended first active period or end the first active period in conjunction with end of the second active period.
